(19)

**Europäisches Patentamt**
**European Patent Office**
**Office européen des brevets**

(11) **EP 2 677 794 B1**

(12) **EUROPEAN PATENT SPECIFICATION**

(45) Date of publication and mention
of the grant of the patent:
**05.04.2017 Bulletin 2017/14**

(51) Int Cl.:
*H04W 16/18* *(2009.01)*     *H04W 84/04* *(2009.01)*

(21) Application number: **12360048.8**

(22) Date of filing: **22.06.2012**

(54) **Small cell base station control**

Steuerung einer kleinzelligen Basisstation

Contrôle d'une station de base à petites cellules

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.12.2013 Bulletin 2013/52**

(73) Proprietor: **ALCATEL LUCENT**
**92100 Boulogne-Billancourt (FR)**

(72) Inventors:
• **Razavi, Rouzbeh**
**Blanchardstown**
**Dublin 15 (IE)**
• **Claussen, Holger**
**Straffan**
**Kildare (IE)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

(56) References cited:
EP-A1- 2 200 360     EP-A2- 1 835 636
WO-A1-2010/037571

• **SUMEETH NAGARAJA ET AL: "Downlink
Transmit Power Calibration for Enterprise
Femtocells", VEHICULAR TECHNOLOGY
CONFERENCE (VTC FALL), 2011 IEEE, IEEE, 5
September 2011 (2011-09-05), pages 1-5,
XP032029752, DOI:
10.1109/VETECF.2011.6093268 ISBN:
978-1-4244-8328-0**
• **VODAFONE ET AL: "H(e)NB Open, Semi-open
and Closed Access", 3GPP DRAFT; S1-083035
HNB OPEN AND SEMI-OPEN ACCESS, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Seoul; 20081020, 20
October 2008 (2008-10-20), XP050329798,
[retrieved on 2008-10-20]**
• **"3rd Generation Partnership Project; Technical
Specification Group Radio Access Network;
Home Node B (HNB) Radio Frequency (RF)
requirements (FDD) (Release 10)", 3GPP
STANDARD; 3GPP TR 25.967, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. V10.0.0, 12 April 2011
(2011-04-12), pages 1-55, XP050477543,
[retrieved on 2011-04-12]**

**(Cont. next page)**

- "3rd Generation Partnership Project; Technical Specification Group Radio Access Network; Evolved Universal Terrestrial Radio Access (E-UTRA); Base Station (BS) radio transmission and reception (Release 10)", 3GPP STANDARD; 3GPP TS 36.104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V10.3.0, 20 June 2011 (2011-06-20), pages 1-104, XP050553312, [retrieved on 2011-06-20]

**Description**

FIELD OF THINE INVENTION

The present invention relates to a method of selecting transmission characteristics of a small cell base station operable to support an area of radio coverage within a wireless telecommunications network, a computer program product and apparatus operable to perform that method.

BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within the macro cell. Such smaller sized cells are sometimes referred to as micro cells, femto cells and pico cells, as defined by Section 4.2 of 3GPP TS 36.104 v 10.3.0. A wireless telecommunications network comprised of different sized cells is known as a heterogeneous wireless telecommunications network. One way to establish such a small cell is to provide a small cell base station, such as a home cell or femto base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.

Small cell base stations are typically intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users.

Such small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments. Due to the relatively small radio coverage area provided by small cell base stations, the energy consumption by each small cell base station is relatively low, due to the shorter distances between the transmitter-receiver pair of the user equipment and the small cell base station.

In a typical small cell base station, a broadband Internet protocol connection is used as "back haul" for connecting to the core network. One type of broadband Internet protocol connection is a Digital Subscriber Line (DSL). The DSL connects a DSL transmitter-receiver "transceiver" of the small cell base station to the core network. The DSL allows voice calls and other services provided by the small cell base station to be supported. The small cell base station also includes a radio frequency (RF) transceiver connected to one or more antennas for wireless communications with the user equipment.

Although deploying such small cell base stations can provide performance improvements to the network, such deployment can also result in unexpected consequences. Accordingly, it is desired to provide an improved technique for controlling small cell base stations.

EP1835636 discloses a wireless cell where a downlink wireless parameter is adjusted according to a measurement result from a measurement apparatus within the cell. This allows the system to keep a minimum coverage as communication needs and the environment changes.

SUMMARY

According to the present invention, a method as set forth in claim 1, a computer program product as set forth in claim 13 and an apparatus as set forth in claim 14 are provided. Embodiments of the invention are claimed in the dependent claims.

A first aspect provides a method of selecting transmission characteristics of a small cell base station operable to support an area of radio coverage within a wireless telecommunications network; the method comprising: receiving an indication of small cell base station pilot signal strength associated with first transmission characteristics from signals received from a plurality of sensors provided at a boundary of a desired area of radio coverage;

adjusting the transmission characteristics; receiving an indication of said small cell base station pilot signal strength associated with adjusted transmission characteristics from signals received from the plurality of sensors provided at said boundary of the desired area of radio coverage;

selecting which of the first transmission characteristics and the adjusted characteristics are determined to result in an area of radio coverage which is closest to the desired area of radio coverage; wherein said plurality of sensors comprise: a first set of sensors provided where radio coverage is desired and a second set of sensors provided where it is desired to prevent said small cell base station providing radio coverage.

The first aspect recognizes that a problem with existing techniques for setting transmission characteristics of a small cell base station lies in the fact that an area of radio coverage supported by a small cell base station is not closely controlled and may result in insufficient coverage where coverage is desired and leakage of coverage to regions where no radio coverage is desired or required. According to existing techniques for setting transmission characteristics a small cell may operate in the same geographical area using the same frequency as an overlying or neighbouring cell and may cause significant interference and/or coverage holes without suitable interference mitigation techniques. Moreover, there is a risk of increased signalling overheads as a result of unnecessary mobility events and a possibility of an increased number of dropped calls as a result of unsuccessful transient handovers. Furthermore, some techniques for setting transmission characteristics may result in a significantly smaller region of coverage than is desired.

The first aspect provides a small cell commissioning technique according to which sensors are provided at, or near to, the boundary of a desired region of radio coverage and feedback from those sensors is taken into account before suitable transmission characteristics of a small cell base station are chosen.

By taking into account readings and measurements indicative of a signal received from the small cell base station in the region of a boundary of a desired region of radio coverage it becomes possible to choose appropriate transmission characteristics to allow a small cell base station to support an area of radio coverage which is closest, or best fits a desired area of radio coverage.

Providing sensors for measurement before setting the transmission characteristics are chosen allows a network provider to be more certain that user equipment operating within the desired area of radio coverage will be provided with radio services through the small cell base station, and that user equipment operating outside the desired area of radio coverage will not be provided with radio services through the small cell base station.

It will be appreciated that the boundary may be finely specified by use of a large number of sensors. The granularity, or level to which a coverage area supported by a base station may be closely correlated to match a desired area of radio coverage, may depend upon the number and location of sensors provided in the region of the boundary.

In one embodiment, the indication of small cell base station pilot signal strength comprises an indication of small cell base station pilot signal strength compared to received pilot signal from any other base station in the wireless communication network at each of the plurality of sensors. Accordingly, when setting or selecting transmission characteristics of a small cell base station the operation of existing base stations which may be seen by user equipment are detected by the sensors provided at the boundary. Thus the influence of other base stations in a network may be taken into account when setting desired operation of the region of radio coverage supported by the small cell base station being deployed. In particular, operation of user equipment within a network may be more readily predicted in the region of the small cell base station. That is to say, user equipment operating within the desired region of radio coverage can be predicted, for example, to be likely to be attached to the small cell base station and/or user equipment operating outside the desired region of radio coverage can be predicted, for example, to be unlikely to be attached to the small cell base station.

In one embodiment, the comparison comprises a ratio between the small cell base station pilot signal strength and a received pilot signal from any other base station in the wireless communication network determined to be strongest at each of the plurality of sensors. Accordingly, the coverage a small cell base station may provide within the network to user equipment at the location of each of the said plurality of sensors according to a set of selected transmission characteristics can be predicted.

In one embodiment, the comparison comprises calculation of a difference between the small cell base station pilot signal strength at each of the plurality of sensors and a received pilot signal from any other base station in the wireless communication network determined to be strongest at each of the plurality of sensors. If the small cell base station pilot signal is received with a greater strength than a pilot from any other base station in the network by a predetermined offset, it is indicative that user equipment at the position of that sensor would be operable to select the cell supported by the small cell base station to provide service within the network. It will also be appreciated that if a base station pilot signal is received with a greater strength than a pilot from the small cell base station by a predetermined offset, it is indicative that user equipment at the position of that sensor would be operable to select the cell supported by the other base station rather than the small cell base station to provide service within the network. That is to say, the small cell base station effectively does not offer a region of radio coverage which would support user equipment in that sensor location because an alternative base station would be preferred by user equipment within the network.

In one embodiment, the plurality of sensors comprises: a first set of sensors provided where radio coverage is desired and a second set of sensors provided where it is desired to prevent the small cell base station providing radio coverage. Accordingly, by providing two types of sensor within the plurality of sensors, the region and boundary may be more accurately defined. Only providing sensors which determine where no coverage is desired may result in a smaller region of radio coverage than is possible to match the desired area of radio coverage. Similarly, only providing sensors which indicate where coverage is desired may result in a larger region of radio coverage than is necessary to match the desired area of radio coverage.

The method further comprises determining whether the first set of sensors provided where radio coverage is desired or the second set of sensors provided where it is desired to prevent the small cell base station providing radio coverage has priority when selecting transmission characteristics. Accordingly, a commissioning party may determine, for a given small cell base station deployment, whether the primary factor in setting transmission characteristics is ensuring that no leakage of coverage occurs outside the desired area of radio coverage, or whether ensuring that reliable radio coverage is provided within the desired area of radio coverage at the expense of some leakage outside that desired area.

In one embodiment, determining whether the area of radio coverage area is close to the area of desired radio coverage sensors comprises determining whether the indication of small cell base station pilot signal strength at each of the plurality of sensors in the first set exceeds any received pilot signal from any other base station in said wireless communication network by a coverage offset. Accordingly, if it is determined that coverage within the desired area of coverage is the priority, ensuring that all sensors report that coverage to user equipment within the network is likely to be provided at that location by the small cell base station indicates that the transmission characteristics closely match those which might mean the small cell base station supports a region of radio coverage which matches the desired area of radio coverage. The "coverage offset" may, in some embodiments, comprise a difference between measured pilots from the small cell base station and any other base station in the network. The difference may be configurable and if selected to be large it will be appreciated that the likelihood that user equipment will select the small cell at the sensor location is high.

In one embodiment, determining whether the area of radio coverage area is close to the area of desired radio coverage sensors further comprises assessing an average ratio between the small cell base station pilot signal strength and a received pilot signal from any other base station in the wireless communication network determined to be strongest at each of the plurality of sensors in the second set. Accordingly, account can be taken of the average leakage of coverage outside the desired area of radio coverage if coverage is ensured within the desired area of radio coverage by transmission characteristics. Determining how close transmission characteristics of a small cell base station are to providing a region of radio coverage which matches a desired area of radio coverage may comprise minimising the average leakage of coverage outside the desired area of radio coverage.

In one embodiment, determining whether the area of radio coverage area is close to the area of desired radio coverage sensors comprises determining whether the indication of small cell base station pilot signal strength at each of the plurality of sensors in the second set is less than any received pilot signal from any other base station in the wireless communication network by an isolation offset. Accordingly, if it is determined that minimising leakage of coverage outside the desired area of coverage is the priority, ensuring that all sensors in the second set report that coverage to user equipment within the network is likely to be provided at that location by a base station other than the small cell base station indicates that the transmission characteristics closely match those which might mean the small cell base station supports a region of radio coverage which matches the desired area of radio coverage. The "isolation offset" may, in some embodiments, comprise a difference between measured pilots from the small cell base station and any other base station in the network. The difference may be configurable and if selected to be large it will be appreciated that the likelihood that user equipment will not select the small cell at the sensor location is high. In a special case where a sensor does not detect a pilot signal from any other base station it will be appreciated that, according to some embodiments, the transmission characteristics may be set so that the small cell base station is likely to provide coverage at that sensor location, since no alternative cell supported by a base station is available.

In one embodiment, determining whether the area of radio coverage area is close to the area of desired radio coverage sensors further comprises: assessing an average ratio between the small cell base station pilot signal strength and a received pilot signal from any other base station the wireless communication network determined to be strongest at each of the plurality of sensors in the first set. Accordingly, account can be taken of the average coverage provided inside the desired area of radio coverage if coverage is prevented outside the desired area of radio coverage by transmission characteristics. Determining how close transmission characteristics of a small cell base station are to providing a region of radio coverage which matches a desired area of radio coverage may comprise maximising coverage inside the desired area of radio coverage.

In one embodiment, the transmission characteristics comprise: small cell base station pilot signal transmission power and adjusting comprises: adjusting the small cell base station pilot signal transmission power. Accordingly, an increase or decrease in transmission power may result in a change to the region of coverage provided by the small cell base station, which may better suit the desired area of radio coverage for an intended small cell deployment.

In one embodiment, the transmission characteristics comprise: small cell base station location and adjusting comprises adjusting the small cell base station location. Accordingly, a change in location of the small cell base station may result in a change to the region of radio coverage supported by the small cell base station, which may better suit the desired area of radio coverage for an intended small cell deployment.

In one embodiment, the transmission characteristics comprise: small cell base station antenna gain pattern and adjusting comprises adjusting the small cell base station antenna gain pattern. Accordingly, a change in antenna gain pattern may result in a change to the region of radio coverage supported by the small cell base station, which may better suit the desired area of radio coverage for an intended small cell deployment.

In one embodiment, the method further comprises: restricting use of user equipment in the desired area of radio coverage provided within a wireless communications network by: providing radio coverage to user equipment in the desired area of radio coverage; selecting services to be accessible to user equipment within the desired area of radio coverage; and restricting services provided to user equipment within the desired area of radio coverage to those services selected to be accessible. Accordingly, it will be appreciated that finely controlling radio coverage within a desired area of is of particular use if it is intended to restrict services offered to user equipment operating within that area of radio coverage.

In one embodiment, the method further comprises defining subsets of user equipment in the desired area of radio coverage and providing different selected services to user equipment in different subsets. Accordingly, services provided to user equipment may depend upon an access list or characteristics associated with user equipment operating within the region of interest.

In one embodiment, the method comprises assessing whether the small cell base station is in an intended geographical location for restriction of use of user equipment and, if not, preventing restriction of use of user equipment in the desired area of radio coverage. Accordingly, provision of a restricted or selective access base station outside a selected geographical location may be prevented.

Further details regarding the selective or restricted access functionality which can be combined with the coverage optimisation of the first aspect are described further in relation to the fourth, fifth and sixth aspects described below.

A second aspect provides a computer program product operable, when executed on a computer, to perform the method of the first aspect.

A third aspect provides a transmission characteristic assessment apparatus operable to select transmission characteristics of a small cell base station operable to support an area of radio coverage within a wireless telecommunications network; said apparatus comprising: adjustment logic operable to adjust said transmission characteristics; reception logic operable to receive an indication of small cell base station pilot signal strength associated with first transmission characteristics from signals received from a plurality of sensors provided at a boundary of a desired area of radio coverage, said plurality of sensors comprise: a first set of sensors provided where radio coverage is desired and a second set of sensors provided where it is desired to prevent said small cell base station providing radio coverage; and an indication of said small cell base station pilot signal strength associated with adjusted transmission characteristics from signals received from said plurality of sensors provided at said boundary of said desired area of radio coverage; and selection logic operable to determine radio coverage from signals from said first set of sensors and leakage of radio coverage from said second set of sensors and to select which of said first transmission characteristics and said adjusted characteristics are determined to result in an area of radio coverage which is closest to said desired area of radio coverage.

In one embodiment, the indication of small cell base station pilot signal strength comprises an indication of small cell base station pilot signal strength compared to a received pilot signal from any other base station in the wireless communication network at each of the plurality of sensors.

In one embodiment, the comparison comprises a ratio between the small cell base station pilot signal strength and a received pilot signal from any other base station in the wireless communication network determined to be strongest at each of the plurality of sensors.

In one embodiment, the comparison comprises calculation of a difference between the small cell base station pilot signal strength at each of the plurality of sensors and a received pilot signal from any other base station in the wireless communication network determined to be strongest at each of the plurality of sensors.

In one embodiment, the plurality of sensors comprises: a first set of sensors provided where radio coverage is desired and a second set of sensors provided where it is desired to prevent the small cell base station providing radio coverage.

In one embodiment, the apparatus further comprises priority logic operable to determining whether the first set of sensors provided where radio coverage is desired or the second set of sensors provided where it is desired to prevent the small cell base station providing radio coverage has priority when selecting transmission characteristics.

In one embodiment, the apparatus further comprises determination logic operable to determine whether the area of radio coverage area is close to the area of desired radio coverage sensors by determining whether the indication of small cell base station pilot signal strength at each of the plurality of sensors in the first set exceeds any received pilot signal from any other base station in said wireless communication network by a coverage offset.

In one embodiment, the apparatus further comprises determination logic operable to determine whether the area of radio coverage area is close to the area of desired radio coverage sensors by also assessing an average ratio between the small cell base station pilot signal strength and a received pilot signal from any other base station in the wireless communication network determined to be strongest at each of the plurality of sensors in the second set.

In one embodiment, the apparatus further comprises determination logic operable to determine whether the area of radio coverage area is close to the area of desired radio coverage sensors by determining whether the indication of small cell base station pilot signal strength at each of the plurality of sensors in the second set is less than any received pilot signal from any other base station in the wireless communication network by an isolation offset.

In one embodiment, the apparatus further comprises determination logic operable to determine whether the area of radio coverage area is close to the area of desired radio coverage sensors by also assessing an average ratio between the small cell base station pilot signal strength and a received pilot signal from any other base station the wireless communication network determined to be strongest at each of the plurality of sensors in the first set.

In one embodiment, the transmission characteristics comprise: small cell base station pilot signal transmission power and adjusting comprises: adjusting the small cell base station pilot signal transmission power.

In one embodiment, the transmission characteristics comprise: small cell base station location and adjusting comprises adjusting the small cell base station location.

In one embodiment, the transmission characteristics comprise: small cell base station antenna gain pattern and adjusting comprises adjusting the small cell base station antenna gain pattern.

In one embodiment, the apparatus comprises: restriction logic operable to restrict use of user equipment in the desired area of radio coverage provided within a wireless communications network by: providing radio coverage to user equipment in the desired area of radio coverage; selection logic operable to select services to be accessible to user equipment within the desired area of radio coverage; and restriction logic operable to restrict services provided to user equipment within the desired area of radio coverage to those services selected to be accessible.

In one embodiment, the selection logic is further operable to define subsets of user equipment in the desired area of radio coverage and the restriction logic is operable to provide different selected services to user equipment in different subsets.

In one embodiment, the apparatus further comprises location assessment logic operable to assess whether the small cell base station is in an intended geographical location for restriction of use of user equipment and, if not, preventing restriction of use of user equipment in the desired area of radio coverage.

A further technique provides a method of restricting use of user equipment in a desired area of radio coverage provided within a wireless communications network; the method comprising: providing radio coverage to user equipment in the desired area of radio coverage; selecting services to be accessible to user equipment within the desired area of radio coverage; and restricting services provided to user equipment within the desired area of radio coverage to those services selected to be accessible.

The fourth aspect recognises that increased usage of mobile telephones can result in an increase in their potential to invade privacy, disrupt silence in locations such as hospitals, theatres, churches and libraries, and cause electromagnetic interference, for example, in aircraft systems. Furthermore, an increase of dependence on mobile telephones as a means of communication has led to the abuse of mobile communications in premises such as prison buildings. Restriction of availability of mobile phone services may ameliorate some of the issues associated with increased mobile telephone use.

Restriction of the availability of mobile phone services may be achieved by deploying mobile telephone jamming devices. Such jamming devices are typically operable to transmit a signal on the same frequency as that used by user equipment, for example, mobile telephones, at a high enough power overpower a signal from a base station supported by a network provider which could provide a functional service to that user equipment. It will be appreciated that there are various problems associated with the use of jamming devices, including some doubt as to the legality of those devices in some countries.

The further technique provides an alternative means to restrict usage of mobile devices in selected locations.

A typical jammer device provides no mechanism to distinguish between users. That is to say, an operational jammer device typically operates to ensure service is unavailable to all users within its immediate vicinity. Embodiments recognize that it may be beneficial to provide selective user service availability. For example, in the region of a prison there may be a need to provide service to prison staff but inmates may be prevented from using some or all services.

A typical jammer device has no mechanism to distinguish between different services available to a user and thus a jammer device is typically operable to prevent users having access to all possible services. It will be appreciated that there are many scenarios in which it may be desirable to restrict access to only some services. For example, if a primary concern in a location is noise caused as a result of user equipment ringing or the talking of users involved in a call, as may be the case in theatres, libraries or churches, it may be desired to restrict services such that circuit switched (CS) voice calls are not supported whilst other services, such as internet browsing and SMS services, may remain available to a user. In one example, it may be desirable for library users to be capable of using their smart devices for searching the internet, but the silence of a library should not be disrupted by voice calls.

A user entering a region being jammed by a traditional jammer device may not be notified of the operation of such a device. It may be beneficial for users entering a region in which services are restricted to be made aware of any service restrictions or, for example, if someone has tried to reach them whilst they are in a region of restricted functionality. In such a case, a user may choose to move out of the restricted area and use a service. The use of typical jammer devices does not allow any such functionality.

If using a jammer device all phone services, including emergency services such as 911 or 999, are inaccessible to users. Since a large percentage of emergency calls are made using mobile phones, deployment of traditional jammer devices may pose a threat to public safety.

User equipment, for example, mobile phones, are typically operable to adapt their transmission power to overcome interference in a region, or to try and ensure a signal reaches a base station successfully. Such transmission power adaptation occurs as part of power control mechanism which exists in almost all radio access cellular communication technologies. For a traditional jammer device to work, it therefore needs to constantly transmit at a very high power. It will be appreciated that such operation may results in human exposure to levels of electromagnetic radiation which may exceed acceptable health standards.

It will also be appreciated that the region of radio spectrum used for cellular communications is licensed. Jammer devices thus may make illegal use of licensed spectrum. Furthermore, since the spectrum in which jamming devices generate interference typically belongs to network operators, the use of traditional jammer devices may be illegal. A traditional jammer device creates interference and disrupts services offered by a network operator. Operators have no control or power to prevent interference caused by those typical jammer devices.

Small cells that enable restrictive access according to aspects and embodiments described may allow an operator to continue to control network access although services may be restricted in particular areas or establishments. Aspects and embodiments may allow better control of selective access control usage in comparison to a typical jammer device.

The method of the fourth aspect allows a small cell base station to operate to provide selective service to users in an area of radio coverage supported by the small cell base station. Such a small cell base station offering selective service to users maybe useful when combined with aspects described herein which provide a coverage optimisation algorithm for small cell base station deployment.

The further technique allows a network operator to provide jamming functionality by restriction or selective restriction of services. That restriction allows the network operator to maintain control over restriction of services within a network, in the particular desired area of coverage provided by a small cell base station. That control of service restriction may be particularly useful where use of relevant RF frequency spectrum is licensed, since a network operator will typically already have such a licence.

The further technique allows a small cell base station to operate to provide "selective" service to users in the region of radio coverage supported by the small cell base station. Provision of an open access small cell in an area of interest will typically result in all user equipment in the vicinity of the base-station being "camped on" to the base station supporting that open access small cell.

Whilst user equipment is camped on to the open access small cell, the small cell base station is operable to have full control regarding a flow of inbound and outbound traffic to user equipment operating within the small cell. That full control includes an ability to enforce a policy regarding the handling of incoming and outgoing calls, data service requests, sms services and similar for all users in the region of coverage supported by the small cell base station. For example, the small cell base-station may be operable to block all incoming and outgoing voice calls but allow data services. In some embodiments, all emergency calls can be enabled for some or all users.

The method may further comprise: defining subsets of user equipment in the desired area of radio coverage and providing different selected services to user equipment in different subsets. According to some embodiments, an access list is defined such that a particular service is only offered users determined to be included on that access list. Such an embodiment may, for example, allow prison staff to receive full service whilst inmates are denied some or all services. Selected services may be provided to a set of users meeting access criteria. The base station is thus operable to define an access list and associate a "privilege list" to users within a region of coverage provided by a base station. Such a privilege list may keep a record of what services are available to each user within the region of coverage. Both the access list and privilege list may be modified by an authority or provider responsible for deployment of the selective access small cell base station.

The method further comprises: informing user equipment on entry to the desired area of coverage that services provided to user equipment within the desired area of radio coverage are restricted. That step of informing may comprise sensing an appropriate instant message to user equipment entering the desired area of coverage. The step of informing may comprise indicating which services are restricted within the desired area of coverage.

User equipment within the desired area of coverage are notified of any attempt originating outside the desired area of coverage to use services which are restricted within the desired area of radio coverage. Accordingly, users maybe notified of incoming calls that have been barred or missed so that those users can exit the region of radio coverage supported by a selective access small cell base station in order to regain full service functionality and, for example, call back. According to some embodiments a notification message may contain some details in relation to the missed call, for example, exact time of missed call and/or phone number of the caller. With such information, a user can make a decision to act in relation to a missed call event. For example, a user may send an sms message to the caller or leave the premises where restricted access is applied to make a call back.

The method further comprises notifying a network provider of an attempt originating within the area of desired radio coverage by user equipment to use a restricted service. Accordingly, for example, in relation to selective access base stations deployed in a prison environment, a base station may be operable to inform a responsible body of any forbidden service access attempts. According to one implementation such informing may comprise an sms message or e-mail containing access attempt details, for example, including one or more of: user identification, destination phone number and/or time of calling attempt.

Misuse of a selective access base station may be limited. In contrast to a traditional jammer device in which a network operator has no control of their purchase and use, a selective access small cell base station typically forms part of a network controlled by a network operator. As a result, a network operator will typically have some visibility of those parties who wish to implement a region of selective access radio coverage. According to some aspects and embodiments, for example, a selective access small cell base station may be acquired by a government authority or other institution only if relevant criteria are met. For example, a network provider may require evidence of ownership of an establishment that has been identified as a candidate for selective access base station functionality.

The method further comprises assessing whether the small cell base station is in an intended geographical location for restriction of use of user equipment and, if not, preventing restriction of use of user equipment in the desired area of radio coverage supported. Accordingly, prevention of misuse of selective access base station devices may be achieved by restricting selective access base station functionality of a small cell base station to a selected geographical area. According to such embodiments, an operator may be able to ensure that a selective access device will only work if it is in an approximate location for which it is intended.

Assessing whether the small cell base station is in an intended geographical location for restriction of use of user equipment comprises receiving an indication of GPS coordinates at which it is desired to provide a desired area of radio coverage offering restricted services and checking whether the small cell base station is positioned in the region of those GPS coordinates. Accordingly, in some embodiments a selective access base station maybe equipped with a Global Positioning System (GPS) receiver. Since a network operator will typically be aware of an intended deployment location, a selective access base station may be operable to shut down if it determined to be located in a position outside that which matches pre-configured coordinates associated with an intended deployment location.

An alternative to use of GPS according to some embodiments is to use measurements and monitoring performed by a small cell base station itself. In particular, a small cell base station is typically operable to detect and measure strengths of signals received from surrounding macrocell and small cell base stations. Since an installation location of a selective access small cell base station will typically be known, a network operator can identify cells which will form part of the selective access small cell neighbouring cell list and pre-configure that list into the selective access base station. Accordingly, some embodiments allow a small cell base station, on installation, to scan for neighbouring cells and if none of the pre-configured neighbour cell IDs are identified whilst some unknown (not pre-configured) cell IDs are found, a selective access base station may be operable to take appropriate action to restrict unauthorised use of its selective access features. For example, the base station may automatically shut down. If no other cell is found when a small cell takes measurements, a selective access small cell base station may continue to function since it would not be operable to disrupt any existing service provided to users. Such a scenario may, for example, occur in an indoor environment with heavy isolation.

In some cases, a network operator maybe capable of noting deployment of a selective access base station by analysing handover event logs.

A fifth technique provides a computer program product operable, when executed on a computer, to perform the method of the further technique.

A sixth technique provides a small cell base station operable to restrict use of user equipment in a desired area of radio coverage provided within a wireless communications network; the small cell base station being operable to provide radio coverage to user equipment in the desired area of radio coverage; and comprising: selection logic operable to select services to be accessible to user equipment within the desired area of radio coverage; and restriction logic operable to restrict services provided to user equipment within the desired area of radio coverage to those services selected to be accessible.

In one case, the small cell base station further comprises: service subset logic operable to define subsets of user equipment in the desired area of radio coverage and provide different selected services to user equipment in different subsets.

The small cell base station further comprises: notification logic operable to inform user equipment on entry to the desired area of coverage that services provided to user equipment within the desired area of radio coverage are restricted.

Notification logic is operable to notify user equipment within the desired area of coverage of any attempt originating outside the desired area of coverage to use services which are restricted within the desired area of radio coverage. According to some embodiments a notification message may contain some details in relation to the missed call, for example, exact time of missed call and/or phone number of the caller.

Notification logic is operable to notify a network provider of an attempt originating within the area of desired radio coverage of an attempt by user equipment to use a restricted service. According to one implementation such informing may comprise an sms message or e-mail containing access attempt details, for example, including one or more of: user identification, destination phone number and/or time of calling attempt.

The small cell base station further comprises location assessment logic operable to assess whether the small cell base station is in an intended geographical location for restriction of use of user equipment and, if not, to prevent restriction of use of user equipment in the desired area of radio coverage supported.

Assessing whether the small cell base station is in an intended geographical location for restriction of use of user equipment comprises receiving an indication of GPS coordinates at which it is desired to provide a desired area of radio coverage offering restricted services and checking whether the small cell base station is positioned in the region of those GPS coordinates.

An alternative to use of GPS according to some embodiments is to use measurements and monitoring performed by a small cell base station itself. In particular, the small cell base station may further comprise neighbour logic operable to detect and measure strengths of signals received from surrounding macrocell and small cell base stations. Accordingly, some embodiments allow a said neighbour logic to operate on installation of a small cell base station, to scan for neighbouring cells and if no pre-configured neighbour cell IDs are identified whilst some unknown (not pre-configured) cell IDs are found, a selective access base station may be operable to take appropriate action to restrict unauthorised use of its selective access features.

Features and embodiments of any aspect described herein may be combined with features and embodiments of any other aspect described herein as appropriate. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates the main components of a telecommunications network according to one embodiment;
Figure 2 illustrates schematically one possible deployment of a small cell base station;
Figure 3 illustrates in flowchart form steps which may be taken by a base station according to some embodiments;
Figure 4 illustrates schematically an example of a multi-element antenna system with four elements; and
Figures 5a and 5b illustrate schematically a possible small cell deployment scenario and a possible antenna gain pattern according to one embodiment.

DESCRIPTION OF THE EMBODIMENTS

Overview

Aspects and embodiments described herein provide a coverage optimisation algorithm for small cell base station deployment. Such optimised coverage provided by a small cell base station may be of particular use when combined with aspects and embodiments described which relate to a small cell base station being operable to provide selective service to users in an area of radio coverage supported by a small cell base station.

Example Network Deployment

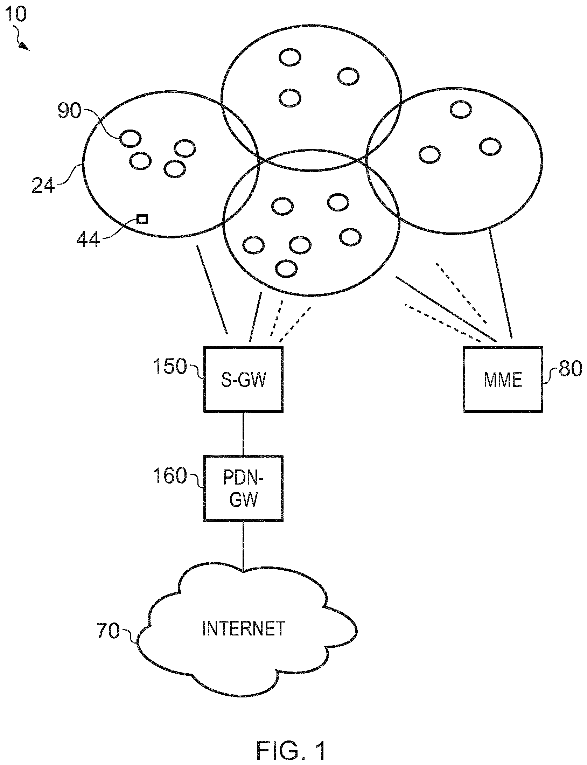

Figure 1 illustrates a wireless communication network, generally 10, according to one embodiment. User equipment 44 roam through the wireless communication network 10. Base stations are provided which support respective macro cells 24. A number of such base stations are provided, which are distributed geographically in order to provide a wide area of coverage to the user equipment 44. When user equipment 44 is within a macro cell 24 supported by the base station then communications may be established between the user equipment 44 and the base station over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by core network nodes. In this long term evolution (LTE) example, a serving gateway S-GW 150, a Packet Data Network Gateway PDN-GW 160 are coupled with the Internet 70 and provide data to and from base stations within the network. A Mobility Management Entity MME 80 provides a control path with the base stations within the network.

The MME 80 maintains a neighbour list which includes information about the geographical relationship between cells supported by base stations. In addition, the MME 80 maintains location information which provides information on the location of the user equipment within the wireless communications network 10.

Small cell base stations are provided, each of which provides a small cell 90 in the vicinity of a building within which the associated small cell base station is installed. The small cells 90 are typically provided within an overlying or underlying macro cell 24. The small cells 90 provide local communications coverage for a user in the vicinity of those buildings. A handover or camping event is initiated between a base station and a small cell base station when the user equipment provides a measurement report to the macro base station which indicates that the small cell base station is within range. The small cell base stations typically utilise the user's broadband Internet connection (such as ADSL, Cable, Ethernet, etc.) as a backhaul.

Small cell base stations are lower-power, lower-cost, and possibly user-deployed base stations that provide a high cellular quality of service in residential or enterprise environment. In contrast to current macro cell approaches where complex and highly reliable base stations are deployed to strategic locations decided by the network owner, the small cell base stations are provided locally by customers. Such small cell base stations provide local coverage in areas of the macro network where quality of service may be low. Hence, the small cell base stations provide for improved quality of service in areas which are difficult for network operators. To reduce the cost of the small cell stations and to reduce complexity and interference effects of the small cell on other user equipment within the macro cell, the transmission power of the small cell base station is relatively low in order to restrict the size of the small cell to a range of tens of metres or less. The small cell base stations have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

The small cell base stations are typically operational in two different modes. In the first, open access mode, a small cell base station allows access to all the users of the operator's network. In the second, a closed access mode, only registered users are able to access the small cell.

Typically, in order to provide adequate coverage to the user equipment supported by the small cell base station, the small cell base station may make downlink transmissions with a transmission power selected by the small cell base station (subject to some predetermined maximum transmission power selected to provide for harmonious network operation).

Accordingly, the small cell base station may generally be able to perform downlink transmissions at any power up to that predetermined maximum and may adjust its actual downlink transmission power based on, for example, measurement reports returned by supported user equipment. Aspects and embodiments described herein provide an alternative means to define transmission characteristics, including, for example, transmission power, of a small cell base station, in order to ensure such a small cell base station provides a well defined region of radio coverage within the network.

Small cell base stations may perform downlink transmissions on frequencies used by neighbouring or overlying base stations (such as a macro base station). Hence, such downlink transmissions may cause interference to user equipment receiving downlink transmissions from a neighbouring or overlying base station. Accordingly, 3GPP TS 36.104 v 10.3.0 defines in Section 6.2.5 conditions under which the maximum transmission power of the small cell base station (referred to as a home base station) is modified and what the modified maximum transmission power under those conditions should be.

Selective Access Small Cell Base Stations

Aspects and embodiments allow a small cell base station to operate to provide "selective" service to users in the region of radio coverage supported by the small cell base station. Provision of an open access small cell, for example, an outdoor deployed metrocell to cover a prison area, or a femtocell provided in a room of a building, in an area of interest will typically result in all user equipment in the vicinity of the base-station being "camped on" to the base station supporting that open access small cell.

Whilst user equipment is camped on to the open access small cell, the small cell base station is operable to have full control regarding a flow of inbound and outbound traffic to user equipment operating within the small cell. That full control includes an ability to enforce a policy regarding the handling of incoming and outgoing calls, data service requests, sms services and similar for all users in the region of coverage supported by the small cell base station. For example, the small cell base-station may be operable to block all incoming and outgoing voice calls but allow data services.

According to some embodiments, an access list is defined such that a particular service is only offered to the users that are included on that access list. Such an embodiment may, for example, allow prison staff to receive full service whilst inmates are denied some or all services.

According to some embodiments, all emergency calls can be enabled for some or all users. In further embodiments, users are notified of incoming calls that have been barred or missed so that those users can exit the region of radio coverage supported by the selective access small cell base station in order to regain full functionality and, for example, call back.

It will be understood that implementations of embodiments of a selective access small cell allow use of services in a very specific region to be restricted and that misuse of "jamming" or restriction of services can therefore be controlled by a network provider.

Selective Access Services

According to an embodiment, premises are equipped with a Selective Access Base-Station (SABS) operating in an open access mode. The selective access small cell base station may be operable to maintain a list of possible small cell users together with an associated service privilege for each user. If users are "camped on" to the selective access base station, one or more of the following tasks may be performed:

■ a selected set of services, for example, voice calls, may be barred for some or all users;
■ selected destination numbers, for example, emergency lines, may be allowed for some or all users;
■ selected services may be provided to a set of users meeting access criteria. The base station is thus operable to define an access list and associate a "privilege list" to users within a region of coverage provided by a base station. Such a privilege list may keep a record of what services are available to each user within the region of coverage. Both the access list and privilege list may be modified by an authority or provider responsible for deployment of the selective access small cell base station;
■ users within the region of radio coverage supported by the selective access base station which have been prevented from receiving incoming calls may be notified of such events. Such notification may occur, for example, via sms messages sent from the selective access small cell base station. According to some embodiments such notification message may contain some details in relation to the missed call, for example, exact time of missed call and/or phone number of the caller. With such information, a user can make a decision to act in relation to a missed call event. For example, a user may send a sms message to the caller or leave the premises where restricted access is applied to make a call back;
■ on entry to a region of radio coverage supported by a selective access small cell base station users may be notified, for example, via an sms message, of which services are available to them. A user may make decisions upon receiving such information, for example, switching off the handset to save battery or to leave the region of coverage supported by the selective access small cell base station;
■ according to some embodiments, for example, in relation to selective access base stations deployed in a prison environment, a base station may be operable to inform a responsible body of any forbidden service access attempts. According to one implementation such informing may comprise an sms message or e-mail containing access attempt details, for example, including one or more of: user identification, destination phone number and/or time of calling attempt.

Misuse of Selective Access Services

According to some aspects and embodiments, misuse of a selective access base station may be limited. In contrast to a traditional jammer device in which a network operator has no control of their purchase and use, a selective access small cell base station typically forms part of a network controlled by a network operator. As a result, a network operator will typically have some visibility of those parties who wish to implement a region of selective access radio coverage. According to some aspects and embodiments, for example, a selective access small cell base station may be acquired by a government authority or other institution only if relevant criteria are met. For example, a network provider may require evidence of ownership of an establishment that has been identified as a candidate for selective access base station functionality.

According to some aspects and embodiments, prevention of misuse of selective access base station devices may be achieved by restricting selective access base station functionality of a small cell base station to a selected geographical area. According to such aspects and embodiments, an operator may be able to ensure that a selective access device will only work if it is in a location for which it is intended.

Accordingly, in some embodiments a selective access base station may be equipped with a Global Positioning System (GPS) receiver. Since a network operator will typically be aware of an intended deployment location, a selective access base station may be operable to shut down if it determined to be located in a position outside that which matches pre-configured coordinates associated with an intended deployment location.

It will be appreciated that incorporation of a GPS receiver into a small cell base station is likely to increase manufacturing costs associated with such a small cell base station. Furthermore, GPS signals may have relatively poor penetration into indoor environments which may prove problematic to small cell base stations deployed indoors.

An alternative to use of GPS according to some embodiments is to use measurements and monitoring performed by a small cell base station itself. In particular, a small cell base station is typically operable to detect and measure strengths of signals received from surrounding macrocell and small cell base stations. Since an installation location of a selective access small cell base station will typically be known, a network operator can identify cells which will form part of the selective access small cell neighbouring cell list and pre-configure that list into the selective access base station. Accordingly, some embodiments allow a small cell base station, on installation, to scan for neighbouring cells and if none of the pre-configured neighbour cell IDs are identified whilst some unknown (not pre-configured) cell IDs are found, a selective access base station may be operable to take appropriate action to restrict unauthorised use of its selective access features. For example, the base station may automatically shut down. If no other cell is found when a small cell takes measurements, a selective access small cell bas e station may continue to function since it would not be operable to disrupt any existing service provided to users. Such a scenario may, for example, occur in an indoor environment with heavy isolation.

In some embodiments, a network operator may be capable of noting deployment of a selective access base station by analysing handover event logs.

Small Cell Base Station Coverage Configuration

One challenge to be faced when deploying small cells generally is that of ensuring that radio coverage is available in an area of interest but not outside that area. That challenge may be of particular importance if using a small cell base station to provide a jamming functionality by operating in a selective access mode. Coverage optimisation is not straightforward due to the nature of propagation of radio signals. Aspects and embodiments provide methods which may be of use when trying to configure or optimise an area of radio coverage supported by a small cell base station.

Coverage Optimisation for Small Cell Base Station Deployment

Objectives

In order to optimise coverage of a small cell base station there are typically two objectives: (1) maximising radio coverage to users within an area of interest; and (2) minimising leakage of radio coverage to a region outside the area of interest. It will be appreciated that those objectives may lead to conflicting implementations of radio coverage at a small cell base station.

Based on intended application and an intended deployment scenario of a small cell base station, one of the objectives listed above may be determined to be more important than the other. For example, in a theatre the priority is likely to be to deploy a selective access small cell base station in such a way that disruption of service to users located outside the theatre hall is minimal even if that means that there are a few spots within the theatre that are not provided with radio coverage by the selective access small cell base station. It will also be appreciated that there may be scenarios, such as selective access base station deployment in a prison or government security department, in which full radio coverage of the premises is the priority even if that results in some leakage of selective radio coverage to a region outside the area of primary coverage. It will be appreciated in the examples given that the region immediately adjacent a prison or government security office is likely to be substantially free of "normal" users.

Implementation

In its simplest form, adjustment of radio coverage provided by any base station may be performed via adjustment of a power level at which a pilot signal is transmitted by the base station. A high transmission power will lead to a large region of radio coverage being provided by a base station and a reduction in transmission power will typically lead to a reduction in an area of radio coverage supported by a base station.

It will be appreciated that more elaborate techniques are available and may include, for example, deployment of multi-element antennas or more complex beam forming techniques.

Small cell base station having omni-directional antennas

If a small cell base station, for example a selective access small cell base station, is equipped with a single omni-directional antenna, coverage adjustment may only be achieved by varying base-station pilot transmission power. To optimise coverage range of such a base station, it is necessary to have a clear definition of boundaries of an intended coverage area together with a clear definition of any region where signal leakage is not desirable. Aspects described herein propose the use of "Virtual Coverage Receivers" (VCRs) and "Virtual Isolation Receivers" (VIRs) to define such boundaries and regions.

A VCR is a device operable to measure received pilot power from a small cell base station and all other existing base-stations, including any macrocells, at its location. A VCR is operable to report those measurements back to the small cell base station.

According to some embodiments a VCR may be operable to report a ratio of the small cell base station pilot transmission power received to a strongest pilot transmission received from any other base-station. That ratio may be referred to as a *"Pilot Ratio"* (PR) and is expressed in decibels.

A VIR may function substantially identically to a VCR, the primary difference being that they are used to identify a region in which small cell base station coverage is not desired.

In the following description a subscript index is used to distinguish between PR quantities reported by VCRs and VIRs.

According to a deployment having N installed VCRs and M installed VIRs:

$PR_c(k)$, $1 \le k \le N$ represents the pilot ratio reported from $k^{th}$ VCR; and

$PR_i(j)$, $1 \le j \le M$ represents the pilot ratio reported from $j^{th}$ VIR.

Depending on an intended small cell base station deployment scenario and whether "leakage minimisation" or "coverage of the intended area" is a priority, embodiments provide an algorithm which may aid coverage optimisation as set out in more detail below:

Coverage Optimisation in a deployment for which leakage minimisation is a priority

It will be appreciated that there are a number of possible deployments in which minimising service disruption to users outside a preselected "ideal" coverage region is a priority. In such deployments, unwanted leakage of radio coverage provided by a small cell base station may not only cause service disruption to some network users, but may also result in unnecessary handover and signalling overheads within a network.

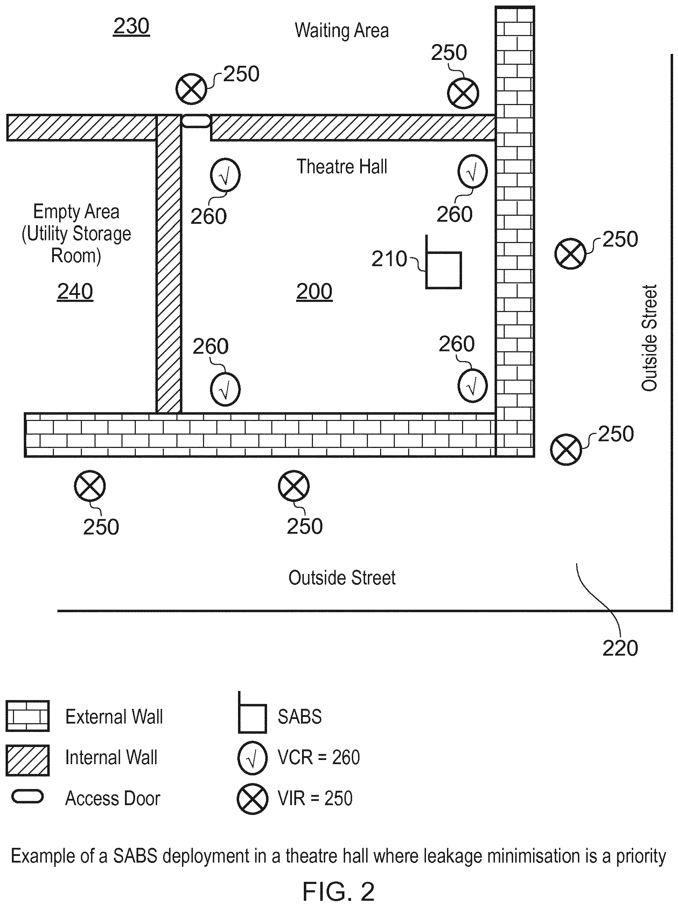

Figure 2 illustrates schematically one possible deployment of a small cell base station. In the deployment shown a theatre hall 200 is to be provided with a selective access small cell base station 210. The theatre hall is exposed to a busy street 220 on two sides and a waiting area 230 is located to another side of the hall 200. To the remaining side of the theatre hall 200 is an area 240 used for storage in which no users are typically present. According to the deployment illustrated in Figure 2, minimising leakage of selective access radio coverage provided by base station 210 outside the theatre hall 200 itself is determined to be a priority, rather than maximising the selective access coverage provided by the selective access base station 210 inside the theatre hall 200.

According to the embodiment illustrated, base station 210 is operable to adjust its pilot transmission to a maximum possible level selected to simultaneously ensure all installed VIRs 250 receive a pilot transmission from the small cell base station 210 at a power determined to be at least $T_i$ dB below the strongest signal from any other base station.

In other words, considering a total of *M* installed VIRs,

$$\forall j = \{1, 2, ... M\} \quad PR_i(j) < -T_i$$

Where $T_i$ is a design parameter which allows a commissioner of a system to select a higher value which can result in a more conservative coverage configuration. Such a bias offset may be needed as a result of shadow fading and multi-path effects which are very common especially in indoor environments.

Enforcement of such a criteria aims to ensure that if a user is in the same location as a VIR, it will not be operable to "camp on" to a cell supported by small cell base station 210.

It will be appreciated that when locating VIRs in order to commission a small cell base station 210, those VIRs may sensibly be placed at an immediate border of a region in which coverage from a small cell base station 210 is undesirable.

A special case occurs if no other base-station is detected outside the area of interest. That case may be identified from measurements taken by a VIR. In such a scenario, the leakage minimisation constraint may be relaxed and the small cell base station 210 may be operable to transmit with a maximum pilot power, $P_{max}$. Such an implementation recognises that if there is already no coverage outside an area of interest, leakage of small cell base station radio coverage to that region may, depending on service availability to users and an implemented deployment policy, provide users outside the area of primary interest with some services, for example, emergency calls may become available as a result of radio signal leakage.

It will be appreciated that, depending on the deployment scenario and the isolation level of an area of interest, resulting, for example, from types of walls surrounding that area, setting the pilot transmission power of a small cell base station to satisfy all VIRs may not be possible or result in best coverage of the area of primary interest.

Coverage within an area of interest is evaluated based on reports from VCRs 260. VCR coverage criteria are satisfied if the received pilot power is determined to be at least $T_c$ dB above the strongest pilot power from any other base-station. In the illustrated case, in which coverage within the area of interest has been selected to be less of a priority that minimising leakage, the VCR criteria may not be met.

It will be appreciated that the location of the small cell base station 210 within the theatre hall 200 will typically affect the coverage performance of the small cell base station assessed by VIRs and VCRs. Whilst not all locations within theatre hall 200 may suitable for installation of a small cell base station, for example, due to electrical power access, decoration and cosmetic constraints, or availability of installation space, there typically exists a number of potential installation locations. According to some embodiments it is possible to fix locations of VCRs and VIRs around an area of interest, and adjust locations of base-station 210 within the theatre hall 200. The coverage performance associated with each location can be evaluated separately and calculations may be made to identify the best installation location amongst all possible installation locations.

In the case where leakage minimisation is the priority as described above, a small cell base station may, according to embodiments, be operable to set its pilot power as described above, selecting a maximum pilot power to satisfy all provided VIRs, and then records VCR reports (i.e. $PR_c$) for each possible base station location. Denoting different locations by using a location index identifier, *I*, the fitness associated with a location *I*, *Fc(I)*, can be considered as an average of the $PR_c$ reports.

In other words, when considering *N* installed VCRs, for location *I*, we have:

$$F(l) = \frac{1}{N} \sum_{k=1:N} PR_c(k)$$

And the best installation location, *I\**, will be the one with the highest associated fitness.

$$l^* = \arg\max_l \left( F(l) \right)$$

<u>Coverage Optimisation in a deployment for which coverage inside an area of interest is a priority</u>

It will be appreciated that there are small cell base station deployment scenarios in which improved coverage within an area of interest is of primary concern, even if such coverage in the area of interest results in coverage leakages to a region outside the area of interest. In such a deployment, transmission power adjustment at a base station is optimised, according to some embodiments, in dependence upon the reports of provided VCRs, (that is to say, in dependence upon reported $PR_c$ values rather than reports made by VIRs.

According to such embodiments, a small cell base station may initiate operation and make transmissions with a minimum pilot power and then increase transmission power incrementally until all VCRs report that their criteria are satisfied.

Considering a total of N installed VCRs, coverage would be deemed to be optimised in an area if the received pilot power at all VCRs is at least $T_c$ dB above the strongest pilot received from any other base-station.

That is to say:

$$\forall k = \{1, 2, \dots N\} \quad PR_c(k) > T_c$$

It will be appreciated that setting the transmission power of a small cell base station to satisfy all VCRs may not simultaneously result in satisfaction of all VIRs. Since lower *PR* values reported by VIRs ($PR_i$) imply improved performance in terms of leakage minimisation, the fitness function in such a scenario may be considered as a negative of the mean of all reported $PR_i$ quantities.

That is:

$$F(l) = -\frac{1}{M} \sum_{j=1:M} PR_i(j)$$

In this case if there is no coverage outside the area of interest, a small cell base station may be operable to transmit at its maximum pilot power, $P_{max}$, and where a plurality of installation locations are possible, the best installation location, *I\**, will be the one with the highest associated fitness:

$$l^* = \arg\max_l \left( F(l) \right)$$

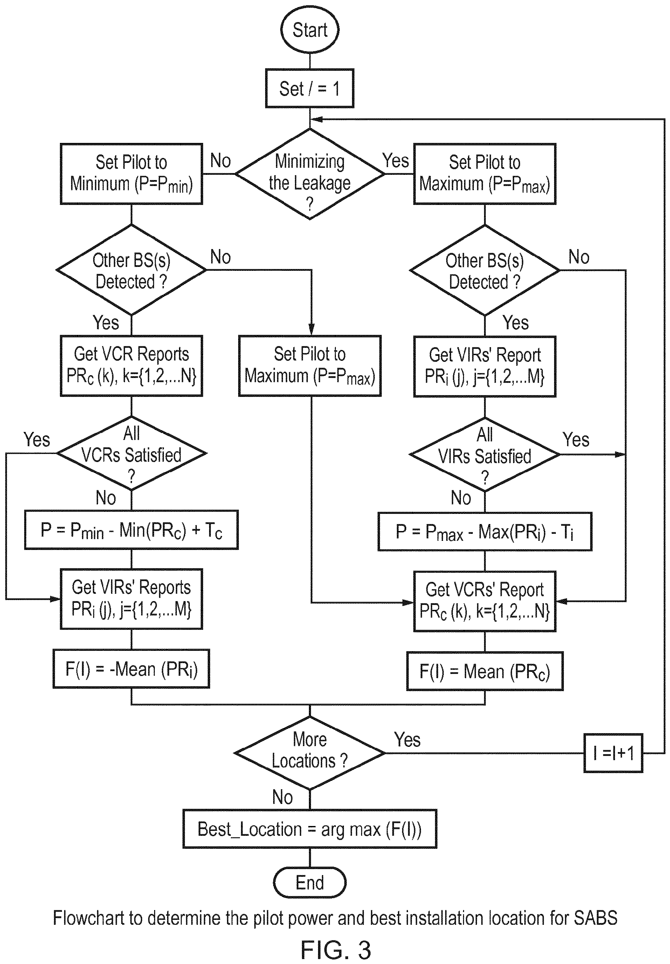

Figure 3 illustrates in flowchart form steps which may be taken by a base station according to some embodiments to determine an appropriate pilot power for a small cell base station in a given deployment.

<u>Small cell base station having a switched multi-element</u>

If a small cell base station is equipped with an omni-directional antenna, the coverage region may be only adjusted via transmission power adjustment and changes in the installation location. To provide another dimension of flexibility, a small cell base station may, in some embodiments, be equipped with a plurality of antenna elements which are connected using a control switch. Such switched multi-element antenna hardware is already known to the wireless communication community. According to such embodiments, antenna elements may have different gain patterns and, based on the switch configuration, those antenna elements may be selected individually or in various combinations.

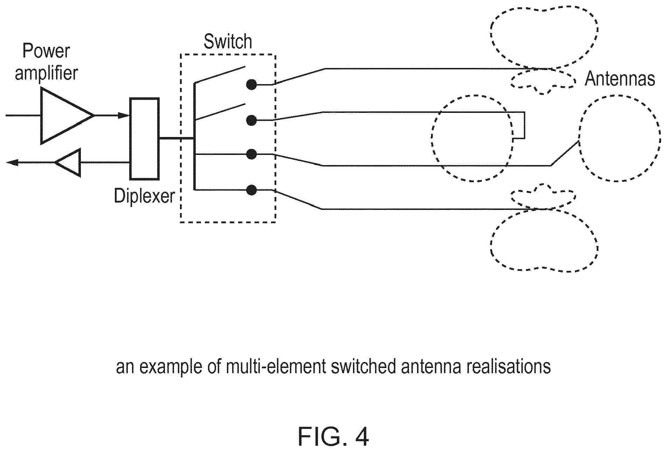

Figure 4 illustrates schematically an example of a multi-element antenna system with four elements.

Use of a small cell base station with a multi-element antenna system may enable exploration of another dimension in coverage optimisation: antenna gain pattern. Antenna gain pattern may be of particular use for a deployment in which there are constraints on installation location.

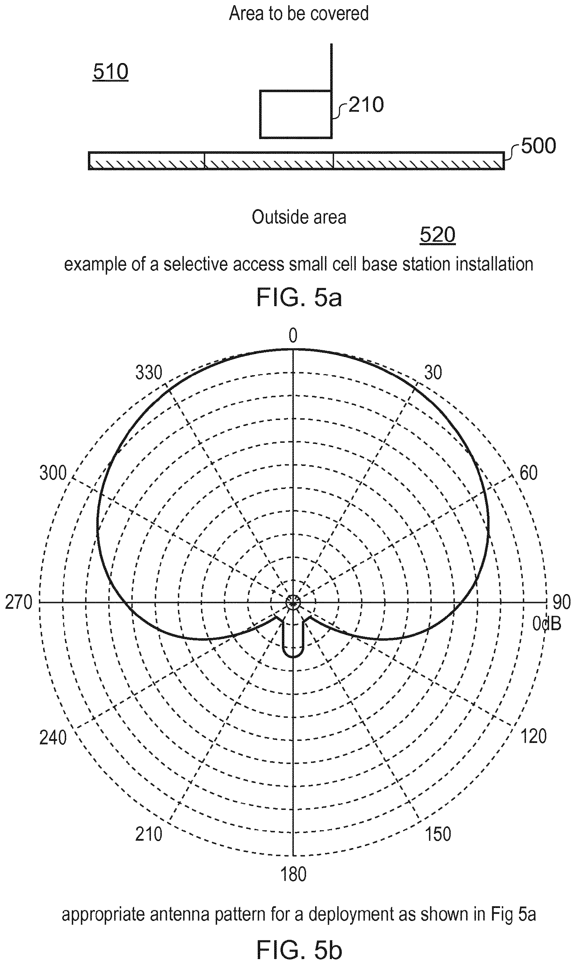

Figures 5a and 5b illustrate schematically a possible small cell deployment scenario and a possible antenna gain pattern according to an embodiment.

Figure 5a illustrates schematically a deployment according to which a small cell base station 210 can only be installed close to a wall 500. In this deployment scenario, the base station is to be installed close to a thin separation wall which defines a boundary between an area of interest 510 and a region where leakage is not desirable 520. One way to provide suitable coverage to area 510 while minimising the leakage in region 520 might be to select use of an antenna element which has a similar gain pattern to that which is shown in Figure 5b.

When commissioning a small cell base station having multi-element antenna functionality, it will be appreciated that according to embodiments all available antenna patterns may be selected at each possible installation location and the performance associated with the best antenna pattern for each location can be stored as that installation location's performance. All possible locations may then be evaluated and a best location can be identified.

Use of coverage optimisation with selective access base station techniques

In typical cellular wireless networks user equipment is operable to automatically "camp on" to a cell determined at the user equipment to have a strongest received pilot power. It will thus be appreciated that optimisation of coverage provided by a small cell base station as described above may ensure that all user equipment operating in the area of interest are likely to be "camped on" to that cell.

Future functionality of user equipment may allow a user to manually select a cell to camp on to. That functionality may be useful when a number of small cells are available to user equipment. If such user equipment functionality is available it will be appreciated that a user may ignore a selective access base station and "camp on" to an alternative cell. If that alternative cell operates on the same frequency as that of the selective access base station, service from the alternative cell may be substantially unavailable as a result of heavy interference in the area of interest from the selective access base station, but the existence of a selective access base station may not have any impact if the alternative cell operates using a different frequency. Such a scenario is undesirable in the case that jamming functionality of a selective access base station is desired. According to some aspects and embodiments user equipment measurements may be utilised to ensure service to all user equipment may be restricted in an area of interest. All wireless cellular technologies support UE measurement reports. Many of these reports are performed in a regular basis and some of them are event triggered. A simple and standard measurement that is a vital part of a cell reselection process, or handover process if the user equipment is participating in an active call, is measurement of received pilot power from all surrounding cells, both inter and intra-frequency cells. In order to ensure that jamming functionality or "selective access" call deployment can be implemented in an area of interest, cells neighbouring a selective access base station may be configured to reject any cell re-selection or handover request from UE which is receiving the strongest pilot power signal which originates from a selective access base station. Accordingly, all users within the area of interest covered by a radio cell supported by a selective access base station may be forced to "camp on" to a cell supported by the selective access cell base-station.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. method of selecting transmission characteristics of a small cell base station (210) operable to support an area of radio coverage within a wireless telecommunications network; said method comprising:

    receiving an indication of small cell base station pilot signal strength associated with first transmission characteristics from signals received from a plurality of sensors (250, 260) provided at a boundary of a desired area of radio coverage, said plurality of sensors comprising a first set of sensors (260) provided where radio coverage is desired and a second set of sensors (250) provided where it is desired to prevent said small cell base station providing radio coverage; adjusting said transmission characteristics; receiving an indication of said small cell base station pilot signal strength associated with adjusted transmission characteristics from signals received from said plurality of sensors provided at said boundary of said desired area of radio coverage; determining radio coverage from signals from said first set of sensors (260) and leakage of radio coverage from said second set of sensors (250); selecting which of said first transmission characteristics and said adjusted characteristics are determined to result in an area of radio coverage which is closest to said desired area of radio coverage.

2. A method according to claim 1, wherein said indication of small cell base station pilot signal strength comprises an indication of small cell base station pilot signal strength compared to received pilot signal from any other base station in said wireless communication network at each of said plurality of sensors.

3. A method according to any preceding claim, wherein determining whether said area of radio coverage area is close to said area of desired radio coverage sensors comprises determining whether said indication of small cell base station pilot signal strength at each sensor of set plurality of sensors in said first set exceeds any received pilot signal from any other base station in said wireless communication network by a coverage offset.

4. A method according to claim 3, wherein determining whether said area of radio coverage area is close to said area of desired radio coverage sensors further comprises assessing an average ratio between said small cell base station pilot signal strength and a received pilot signal from any other base station in said wireless communication network determined to be strongest at each of said plurality of sensors in said second set.

5. A method according to any one of claims 1 to 2, wherein determining whether said area of radio coverage area is close to said area of desired radio coverage sensors comprises determining whether said indication of small cell base station pilot signal strength at each sensor of set plurality of sensors in said second set is less than any received pilot signal from any other base station in said wireless communication network by an isolation offset.

6. A method according to claim 5, wherein determining whether said area of radio coverage area is close to said area of desired radio coverage sensors further comprises assessing an average ratio between said small cell base station pilot signal strength and a received pilot signal from any other base station in said wireless communication network determined to be strongest at each of said plurality of sensors in said first set.

7. A method according to any preceding claim, wherein said transmission characteristics comprise: small cell base station pilot signal transmission power and adjusting comprises adjusting said small cell base station pilot signal transmission power.

8. A method according to any preceding claim, wherein said transmission characteristics comprise: small cell base station location and adjusting comprises adjusting said small cell base station location.

9. A method according to any preceding claim, wherein said transmission characteristics comprise: small cell base station antenna gain pattern and adjusting comprises adjusting said small cell base station antenna gain pattern.

10. A method according to any preceding claim, wherein said method further, comprises: restricting use of user equipment in said desired area of radio coverage provided within a wireless communications network by:

    providing radio coverage to user equipment in said desired area of radio coverage;
selecting services to be accessible to user equipment within said desired area of radio coverage; and
restricting services provided to user equipment within said desired area of radio coverage to those services selected to be accessible.

11. A method according to claim 10, further comprising defining subsets of user equipment in said desired area of radio coverage and providing different selected services to user equipment in different subsets.

12. A method according to claim 10 or claim 11, further comprising assessing whether said small cell base station is in an intended geographical location for restriction of use of user equipment and, if not, preventing restriction of use of user equipment in said desired area of radio coverage.

13. A computer program product operable, when executed on a computer, to perform the method of any one of claims 1 to 12.

14. A transmission characteristic assessment apparatus operable to select transmission characteristics of a small cell base station operable to support an area of radio coverage within a wireless telecommunications network; said apparatus comprising:

adjustment logic operable to adjust said transmission characteristics;
reception logic operable to receive an indication of small cell base station pilot signal strength associated with first transmission characteristics from signals received from a plurality of sensors provided at a boundary of a desired area of radio coverage, said plurality of sensors comprise: a first set of sensors (260) provided where radio coverage is desired and a second set of sensors (250) provided where it is desired to prevent said small cell base station providing radio coverage; and
an indication of said small cell base station pilot signal strength associated with adjusted transmission characteristics from signals received from said plurality of sensors provided at said boundary of said desired area of radio coverage; and selection logic operable to determine radio coverage from signals from said first set of sensors and leakage of radio coverage from said second set of sensors and to select which of said first transmission characteristics and said adjusted characteristics are determined to result in an area of radio coverage which is closest to said desired area of radio coverage.

**Patentansprüche**

1. Verfahren zum Auswählen von Übertragungscharakteristiken einer kleinzelligen Basisstation (210), die betriebsfähig ist für das Unterstützen eines Funkversorgungsbereichs eines drahtlosen Telekommunikationsnetzes, wobei besagtes Verfahren umfasst:

den Empfang einer Indikation der Pilotsignalstärke der kleinzelligen Basisstation, die assoziiert ist mit ersten Übertragungscharakteristiken von Signalen, die von einer Vielzahl von Sensoren (250, 260) empfangen werden, die am Rand eines erwünschten Funkversorgungsbereichs bereitgestellt sind, wobei besagte Vielzahl von Sensoren einen ersten Satz von Sensoren (260) umfasst, der dort bereitgestellt ist, wo die Funkversorgung gewünscht ist, und einen zweiten Satz von Sensoren (250), der dort bereitgestellt ist, wo das Bereitstellen von Funkversorgung durch die kleinzellige Basisstation unterbunden werden soll;
das Abstimmen besagter Übertragungscharakteristiken;
den Empfang einer Indikation besagter Pilotsignalstärke der kleinzelligen Basisstation, die assoziiert ist mit abgestimmten Übertragungscharakteristiken von Signalen, die von besagter Vielzahl von Sensoren empfangen werden, die an besagtem Rand besagten erwünschten Funkversorgungsbereichs bereitgestellt sind;
das Bestimmen der Funkversorgung anhand von Signalen von besagtem erstem Satz von Sensoren (260) und des Verlusts von Funkversorgung von Signalen von besagtem zweitem Satz von Sensoren (250);
das Auswählen, welche der besagten ersten Übertragungscharakteristiken und der besagten abgestimmten Charakteristiken dazu bestimmt werden, einen Funkversorgungsbereich zu bilden.

2. Verfahren nach Anspruch 1, wobei besagte Indikation der Pilotsignalstärke einer kleinzelligen Basisstation eine Indikation der Pilotsignalstärke der kleinzelligen Basisstation im Vergleich zur empfangenen Pilotsignalstärke einer beliebigen anderen Basisstation in besagtem drahtlosem Kommunikationsnetz an jedem Sensor aus der besagten Vielzahl von Sensoren umfasst.

3. Verfahren nach einem jeglichen der vorgenannten Ansprüche, wobei das Bestimmen, ob besagter Funkversorgungsbereich in der Nähe besagten Bereichs von Sensoren mit gewünschter Funkversorgung ist, das Bestimmen umfasst, ob besagte Indikation der Pilotsignalstärke der kleinzelligen Basisstation an jedem Sensor aus besagter Vielzahl von Sensoren in besagtem erstem Satz von Sensoren um einen Funkversorgungs-Offset höher ist als irgendein von irgendeiner anderen Basisstation in besagtem drahtlosem Kommunikationsnetz empfangenes Pilotsignal.

4. Verfahren nach Anspruch 3, wobei das Bestimmen, ob besagter Funkversorgungsbereich in der Nähe besagten Bereichs von Sensoren mit erwünschter Funkversorgung liegt, weiterhin das Veranschlagen eines Durchschnittsverhältnisses zwischen besagter Pilotsignalstärke der kleinzelligen Basisstation und der Pilotsignalstärke eines von irgendeiner anderen Basisstation in besagtem drahtlosem Kommunikationsnetz empfangenen Pilotsignals umfasst, welches an jedem aus der Vielzahl von Sensoren besagten zweiten Satzes als das stärkste Pilotsignal bestimmt wurde.

5. Verfahren nach einem der Ansprüche 1 bis 2, wobei das Bestimmen, ob besagter Funkversorgungsbereich in der Nähe besagten Bereichs von Sensoren mit gewünschter Funkversorgung ist, das Bestimmen umfasst, ob besagte Indikation der Pilotsignalstärke der kleinzelligen Basisstation an jedem Sensor aus besagter Vielzahl von Sensoren in besagtem zweitem Satz von Sensoren um einen Isolations-Offset niedriger ist als irgendein von irgendeiner anderen Basisstation in besagtem drahtlosem Kommunikationsnetz empfangenes Pilotsignal.

6. Verfahren nach Anspruch 5, wobei das Bestimmen, ob besagter Funkversorgungsbereich in der Nähe besagten Bereichs von Sensoren mit erwünschter Funkversorgung liegt, weiterhin das Feststellen eines Durchschnittsverhältnisses zwischen besagter Pilotsignalstärke der kleinzelligen Basisstation und der Pilotsignalstärke eines von irgendeiner anderen Basisstation in besagtem drahtlosem Kommunikationsnetz empfangenen Pilotsignals umfasst, welches als das stärkste Pilotsignal an jedem aus der Vielzahl von Sensoren besagten ersten Satzes bestimmt wurde.

7. Verfahren nach jeglichem der vorgenannten Ansprüche, wobei besagte Übertragungscharakteristiken umfassen: Pilotsignal-Übertragungsstärke der kleinzelligen Basisstation und Abstimmung umfasst das Abstimmen der besagten Pilotsignal-Übertragungsstärke der kleinzelligen Basisstation.

8. Verfahren nach jeglichem der vorgenannten Ansprüche, wobei besagte Übertragungscharakteristiken umfassen: Standort kleinzellige Basisstation und Abstimmung umfasst das Abstimmen des besagten Standorts der kleinzelligen Basisstation.

9. Verfahren nach jeglichem der vorgenannten Ansprüche, wobei besagte Übertragungscharakteristiken umfassen: Antennenverstärkungsmuster kleinzellige Basisstation und Abstimmung umfasst das Abstimmen des besagten Antennenverstärkungsmusters der kleinzelligen Basisstation.

10. Verfahren nach einem jeglichen der vorgenannten Ansprüche, wobei besagtes Verfahren weiterhin umfasst: Einschränken der Benutzung von Benutzergeräten in besagtem erwünschtem Funkversorgungsbereich, der in einem drahtlosen Kommunikationsnetz bereitgestellt wird, durch:

    das Bereitstellen von Funkversorgung für Benutzergeräte in besagtem erwünschtem Funkversorgungsbereich;
    die Auswahl von Diensten, die für Benutzergeräte in besagtem erwünschtem Funkversorgungsbereich zugänglich sein sollen; und
    das Beschränken von Diensten, die Benutzergeräten in besagtem erwünschtem Funkversorgungsbereich bereitgestellt werden, auf solche Dienste, die dafür ausgewählt wurden, zugänglich zu sein.

11. Verfahren nach Anspruch 10, weiterhin das Definieren von Teilsätzen von Benutzergeräten in besagtem erwünschtem Funkversorgungsbereich und das Bereitstellen unterschiedlicher ausgewählter Dienste für Benutzergeräte unterschiedlicher Teilsätze umfassend.

12. Verfahren nach Anspruch 10 oder 11, weiterhin das Feststellen umfassend, ob sich besagte kleinzellige Basisstation an einem vorgesehenen geografischen Standort für die Beschränkung der Benutzung von Benutzergeräten befindet, und wenn dies nicht der Fall ist, das Verhindern der Beschränkung der Benutzung von Benutzergeräten in besagtem erwünschtem Funkversorgungsbereich.

13. Computerprogramm-Produkt, betreibbar für das Durchführen des Verfahrens eines jeglichen der Ansprüche 1 bis 12, wenn es auf einem Computer ausgeführt wird.

14. Feststellungsvorrichtung für Übertragungscharakteristiken, ausgelegt für das Auswählen von Übertragungscharakteristiken einer kleinzelligen Basisstation, die betriebsfähig ist für das Unterstützen eines Funkversorgungsbereichs eines drahtlosen Telekommunikationsnetzes, wobei besagte Vorrichtung umfasst:

    eine Abstimmungslogik, ausgelegt für das Abstimmen der besagten Übertragungscharakteristiken;

eine Empfangslogik, ausgelegt für das Empfangen einer Indikation zur Pilotsignalstärke einer kleinzelligen Basisstation, die assoziiert ist mit ersten Übertragungscharakteristiken von Signalen, die von besagter Vielzahl von Sensoren empfangen werden, die an einem Rand eines erwünschten Funkversorgungsbereichs bereitgestellt sind, wobei besagte Vielzahl von Sensoren umfasst: einen ersten Satz von Sensoren (260), der dort bereitgestellt ist, wo die Funkversorgung gewünscht ist, und einen zweiten Satz von Sensoren (250), der dort bereitgestellt ist, wo das Bereitstellen von Funkversorgung durch die kleinzellige Basisstation unterbunden werden soll; und

eine Indikation besagter Pilotsignalstärke der kleinzelligen Basisstation, die assoziiert ist mit abgestimmten Übertragungscharakteristiken von Signalen, die von besagter Vielzahl von Sensoren empfangen werden, die an besagtem Rand besagten erwünschten Funkversorgungsbereichs bereitgestellt sind;

und eine Auswahllogik, die ausgelegt ist für das Bestimmen der Funkversorgung aus Signalen von besagtem erstem Satz von Sensoren und des Verlusts von Funkversorgung von besagtem zweitem Satz von Sensoren sowie für das Auswählen, welche der besagten ersten Übertragungscharakteristiken und der besagten abgestimmten Charakteristiken dazu bestimmt werden, einen Funkversorgungsbereich zu bilden, der möglichst nahe an besagtem erwünschtem Funkversorgungsbereich liegt.

**Revendications**

1. Procédé de sélection de caractéristiques de transmission d'une station de base de petite cellule (210) exploitable pour supporter une zone de couverture radio à l'intérieur d'un réseau de télécommunications sans fil ; ledit procédé comprenant les étapes suivantes :

recevoir une indication d'intensité de signal pilote de station de base de petite cellule associée à des premières caractéristiques de transmission à partir de signaux reçus en provenance d'une pluralité de capteurs (250, 260) pourvue au niveau d'une frontière d'une zone souhaitée de couverture radio, ladite pluralité de capteurs comprenant un premier ensemble de capteurs (260) pourvu là où une couverture radio est souhaitée et

un second ensemble de capteurs (250) pourvu là où il est souhaité d'empêcher ladite station de base de petite cellule de fournir une couverture radio ;

ajuster lesdites caractéristiques de transmission ;

recevoir une indication de ladite intensité de signal pilote de station de base de petite cellule associée à des caractéristiques de transmission ajustées à partir de signaux reçus en provenance de ladite pluralité de capteurs pourvue au niveau de ladite frontière de ladite zone souhaitée de couverture radio ;

déterminer une couverture radio à partir de signaux en provenance dudit premier ensemble de capteurs (260) et une perte de couverture radio à partir dudit second ensemble de capteurs (250) ;

sélectionner lesquelles desdites premières caractéristiques de transmission et desdites caractéristiques ajustées sont déterminées comme aboutissant à une zone de couverture radio qui est la plus proche de ladite zone souhaitée de couverture radio.

2. Procédé selon la revendication 1, dans lequel ladite indication d'intensité de signal pilote de station de base de petite cellule comprend une indication d'intensité de signal pilote de station de base de petite cellule comparée à un signal pilote reçu en provenance d'une quelconque autre station de base dans ledit réseau de communication sans fil au niveau de chacun de ladite pluralité de capteurs.

3. Procédé selon l'une quelconque des revendications précédentes, dans lequel la détermination de si ladite zone de la zone de couverture radio est proche de ladite zone de capteurs de couverture radio souhaitée comprend la détermination de si ladite indication d'intensité de signal pilote de station de base de petite cellule au niveau de chaque capteur de ladite pluralité de capteurs dans ledit premier ensemble dépasse un quelconque signal pilote reçu en provenance d'une quelconque autre station de base dans ledit réseau de communication sans fil d'un décalage de couverture.

4. Procédé selon la revendication 3, dans lequel la détermination de si ladite zone de la zone de couverture radio est proche de ladite zone de capteurs de couverture radio souhaitée comprend en outre l'estimation d'un rapport moyen entre ladite intensité de signal pilote de station de base de petite cellule et un signal pilote reçu en provenance d'une quelconque autre station de base dans ledit réseau de communication sans fil déterminé comme étant le plus fort au niveau de chacun de ladite pluralité de capteurs dans ledit second ensemble.

5. Procédé selon l'une quelconque des revendications 1 à 2, dans lequel la détermination de si ladite zone de la zone de couverture radio est proche de ladite zone de capteurs de couverture radio souhaitée comprend la détermination de si ladite indication d'intensité de signal pilote de station de base de petite cellule au niveau de chaque capteur de ladite pluralité des capteurs dans ledit second ensemble est inférieure à un quelconque signal pilote reçu en provenance d'une quelconque autre station de base dans ledit réseau de communication sans fil d'un décalage d'isolement.

6. Procédé selon la revendication 5, dans lequel la détermination de si ladite zone de la zone de couverture radio est proche de ladite zone de capteurs de couverture radio souhaitée comprend en outre l'estimation d'un rapport moyen entre ladite intensité de signal pilote de station de base de petite cellule et un signal pilote reçu en provenance d'une quelconque autre station de base dans ledit réseau de communication sans fil déterminé comme étant le plus fort au niveau de chacun de ladite pluralité de capteurs dans ledit premier ensemble.

7. Procédé selon l'une quelconque des revendications précédentes, dans lequel lesdites caractéristiques de transmission comprennent : une puissance de transmission de signal pilote de station de base de petite cellule et l'ajustement comprend l'ajustement de ladite puissance de transmission de signal pilote de station de base de petite cellule.

8. Procédé selon l'une quelconque des revendications précédentes, dans lequel lesdites caractéristiques de transmission comprennent : une localisation de station de base de petite cellule et l'ajustement comprend l'ajustement de ladite localisation de station de base de petite cellule.

9. Procédé selon l'une quelconque des revendications précédentes, dans lequel lesdites caractéristiques de transmission comprennent : un diagramme de gain d'antenne de station de base de petite cellule et l'ajustement comprend l'ajustement dudit diagramme de gain d'antenne de station de base de petite cellule.

10. Procédé selon l'une quelconque des revendications précédentes, ledit procédé comprenant en outre l'étape suivante : restreindre l'utilisation d'équipement d'utilisateur dans ladite zone souhaitée de couverture radio pourvue à l'intérieur d'un réseau de communications sans fil en :

fournissant une couverture radio à un équipement d'utilisateur dans ladite zone souhaitée de couverture radio ;
sélectionnant des services pour être accessibles à un équipement d'utilisateur à l'intérieur de ladite zone souhaitée de couverture radio ; et

restreignant des services fournis à un équipement d'utilisateur à l'intérieur de ladite zone souhaitée de couverture radio à ces services sélectionnés pour être accessibles.

11. Procédé selon la revendication 10, comprenant en outre la définition de sous-ensembles d'équipement d'utilisateur dans ladite zone souhaitée de couverture radio et la fourniture de différents services sélectionnés à un équipement d'utilisateur dans des sous-ensembles différents.

12. Procédé selon la revendication 10 ou la revendication 11, comprenant en outre l'estimation de si ladite station de base de petite cellule se trouve dans une localisation géographique voulue pour la restriction d'utilisation d'équipement d'utilisateur, et sinon, le fait d'empêcher la restriction d'utilisation d'équipement d'utilisateur dans ladite zone souhaitée de radio couverture.

13. Produit de programme informatique exploitable, lorsqu'il est exécuté sur un ordinateur, pour effectuer le procédé de l'une quelconque des revendications 1 à 12.

14. Appareil d'estimation de caractéristique de transmission exploitable pour sélectionner des caractéristiques de transmission d'une station de base de petite cellule exploitable pour supporter une zone de couverture radio à l'intérieur d'un réseau de télécommunications sans fil ; ledit appareil comprenant :

une logique d'ajustement exploitable pour ajuster lesdites caractéristiques de transmission ;
une logique de réception exploitable pour recevoir une indication d'intensité de signal pilote de station de base de petite cellule associée à des premières caractéristiques de transmission à partir de signaux reçus en provenance d'une pluralité de capteurs pourvue au niveau d'une frontière d'une zone souhaitée de couverture radio, ladite pluralité de capteurs comprend : un premier ensemble de capteurs (260) pourvu là où une couverture radio est souhaitée et un second ensemble de capteurs (250) pourvu là où il est souhaité d'empêcher ladite station de base de petite cellule de fournir une couverture radio ; et
une indication de ladite intensité de signal pilote de station de base de petite cellule associée à des caractéristiques de transmission ajustées à partir de signaux reçus en provenance de ladite pluralité de capteurs pourvue au niveau de ladite frontière de ladite zone souhaitée de couverture radio ;
et une logique de sélection exploitable pour déterminer une couverture radio à partir de signaux en provenance dudit premier ensemble de capteurs et une perte de couverture radio à partir dudit second ensemble de capteurs et pour sélectionner lesquelles desdites premières caractéristiques de transmission et desdites caractéristiques ajustées sont déterminées comme aboutissant à une zone de couverture radio qui est la plus proche de ladite zone souhaitée de couverture radio.

FIG. 1

Example of a SABS deployment in a theatre hall where leakage minimisation is a priority

FIG. 2

Start

Set *I* = 1

Minimizing the Leakage ?

No → Set Pilot to Minimum (P=P$_{min}$)

Yes → Set Pilot to Maximum (P=P$_{max}$)

Other BS(s) Detected ?

No → Set Pilot to Maximum (P=P$_{max}$)

Yes ↓

Get VCR Reports PR$_c$ (k), k={1,2,...N}

All VCRs Satisfied ?

Yes →

No ↓

$P = P_{min} - Min(PR_c) + T_c$

Get VIRs' Reports PR$_i$ (j), j={1,2,...M}

F(I) = -Mean (PR$_i$)

Other BS(s) Detected ?

No →

Yes ↓

Get VIRs' Report PR$_i$ (j), j={1,2,...M}

All VIRs Satisfied ?

Yes →

No ↓

$P = P_{max} - Max(PR_i) - T_i$

Get VCRs' Report PR$_c$ (k), k={1,2,...N}

F(I) = Mean (PR$_c$)

More Locations ?

Yes → I =I+1

No ↓

Best_Location = arg max (F(I))

End

Flowchart to determine the pilot power and best installation location for SABS

FIG. 3

an example of multi-element switched antenna realisations

FIG. 4

Area to be covered

510

210

500

Outside area

520

example of a selective access small cell base station installation

FIG. 5a

appropriate antenna pattern for a deployment as shown in Fig 5a

FIG. 5b

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1835636 A